# EUROPEAN PATENT APPLICATION

(11) **EP 1 634 699 A1**
(43) Date of publication of application: **15.03.2006**
(21) Application number: 04425677.4
(22) Date of filing: 10.09.2004
(51) Int. Cl.: B32B 27/32

(54) **Multilayer metallized film and production method**

(71) Applicant: Syrom 90 S.P.A., 50059 Vinci, Firence (IT)
(72) Inventor: Nassi, Aldo, 50059 Sovigliana, Vinci, Firence (IT); Lepori, Alessandro, 50053 Pontorme, Empoli, Firenze (IT)
(74) Representative: Mannucci, Michele

(57) **Abstract**

To increase the barrier effect of a metallized film intended for use in the packaging, in particular of food products, a particular composition of the plastic layer (A) is suggested, on which the metal layer (M) is deposited by vacuum evaporation. The plastic layer comprises a polypropylene and butene copolymer and is suitably treated prior to metallization.

## Description

### Technical Field

The present invention relates to a multilayer metallized plastic film for packaging, and to a procedure for the production thereof.

### Measurement methods used to determine the properties of the metallized structure

The description hereunder and in particular the embodiments cite characteristic parameters of the film, which are measured according to the standard methods indicated hereunder.
Oxygen Transmission Rates (OTR): ASTM D 3985 (23°C; 0% r.h.)
Water Vapor Transmission Rates (WVTR): ASTM D 1249 (38°C; 90% r.h.)
Optical Density (O.D.): Macbeth instrument TD 931
Longitudinal Modulus of Elasticity (Long. ME): ASTM D 882
Transverse Modulus of Elasticity (Transv. ME): ASTM D 882
Vicat Softening Point (at 10 N): ISO 306/A
Metal-Film Adhesion (Tape Test): AIMCAL TP 104-87
Seal resistance: 130°C; 15 psi; 1 s (Polikrimper/TX-Alipack heat-sealing machine)

### State of the Art

Packaging of any type of product and, in particular, food products, is an essential part of the industry for the production and distribution of consumer goods. In fact, all food products can only be protected and distributed if packaged.

The packaging must necessarily perform three functions: preservation, distribution; presentation.

The eating habits of the various countries in the world are very different, although the basic components of all foods are fundamentally: carbohydrates, fats, proteins, with carbohydrates being largely prevalent. The external element from which carbohydrates must be protected is represented by humidity. The modem product, which is most suitable to offer carbohydrates protection from humidity and with the highest protection/cost ratio is bi-oriented polypropylene, introduced on world markets at the beginning of the sixties. However, the initial material was either not sealable or difficult to seal. This led to the need to make it sealable (an essential property for closing and distributing packaged products) and printable (presentation). Printability was facilitated by the introduction of "Corona" surface treatment which allows the introduction of some groups with increased or reduced polarity (i.e. -CO-; COH, COOR, COOH) resulting in an increase in the surface energy of the film.

Sealability was obtained firstly by spreading a heat-sealing lacquer on the surface of the film or with the lamination technique using adhesives with non-oriented polyolefin films. This technique is still used to package products in powder form (such as sugars and flours) or with high apparent density (such as pasta, rice and beans).

Only at the end of the 70s and beginning of the 80s did lacquering and lamination technologies start to give way on the market to coextruded structures, i.e. in which several layers of different plastic materials were extruded simultaneously to form a multilayer film.

The first coextruded structure was of the type A-B-A, in which the layer A was constituted by a copolymer of ethylene and propylene, the ethylene content of which ranged from 2-4% (in weight) and the propylene content of which ranged from 98-96%. The layer B was constituted by isotactic polypropylene with a melting point ranging from 157-160°C. This structure had the mechanical properties of a bi-oriented polypropylene film and an improved printability, as the surface A (ethylene-propylene copolymer) is more receptive to introduction of the polar groups cited above. In fact, the ink spread on the surface A, suitably treated, has an adhesion on the surface greater than or equal to 90%, while on the structure B-B-B adhesion is less than 90%.

With regard to sealability, the aforesaid structure A-B-A had a somewhat restricted sealability range (140-150°C), making its use precarious in packaging machines with working speeds of above 20 m/minute.

In the second half of the 80s the cited ethylene propylene copolymers were replaced by ethylene-propylene-butene terpolymers. The composition of the terpolymers is as follows:
ethylene: 2-3%
propylene: 95-92%
butene: 3-5%

The first structure tested with these products was again of the A-B-A type. Printability was again improved as it was discovered that the presence of butene favors the introduction of the aforesaid polar groups. Adhesion of the inks is greater than or equal to 98%.

Sealability was improved as the sealing range was expanded (130-150°C), making it possible to use said material at packaging speeds of up to 40 m/minute. However, the market demanded even higher packaging speeds (up to 60 meters/minute).

Expansion of the sealability range would be possible by increasing the ethylene and butene content. This was done, the sealability range was expanded from the one indicated above to 112-150 °C. In this case the structure A-B-A could not be used, as there were problems of packing in the wound film. Therefore, the structure A-B-A was replaced with the structure A-B-C, where A is the terpolymer as above, B is the same as the structure A-B-A, while C is an ethylene-propylene-butene terpolymer, with the following composition:
- ethylene: 3-4%
- propylene: 93- 90%
- butene: 4-6%

Until the mid 80s the fundamental requirement of food packaging designers was to protect food products particularly rich in carbohydrates (cookies, potato chips, etc.). These products had to be protected even in extreme conditions (tropical climate: 90% relative humidity and 38°C, or desert climate: 8% relative humidity and 38°C). To better understand the problems of this requirement attention should be paid to the fact that crackers, potato chips and corn chips have a residual humidity upon leaving the processing ovens of around 2-2.4%. These products become unpalatable if the water content rises above 3.4-3.6% or drops below 1.5%.

With regard to the presentation of the packaged product, this was entrusted to the appearance and care taken over printing the packaging material. In the second half of the 80s, the first films metallized with aluminum appeared consistently on the packaging market. The first metallized structure was the structure A-B-A, wherein A was constituted by the ethylene-propylene copolymer.

Aluminum does not adhere perfectly to the covered surface and during the adhesion tape test removal of aluminum can at times reach up to 30%. The aluminum was therefore only used for decorative and not for protective purposes.

At the end of the 80s things started to change in food product packaging technology. In fact, it became obvious that besides carbohydrates, fats also required protection; these are contained in practically all the aforesaid food products, in percentages varying from 5% (crackers) to 40% (potato chips).

It was therefore realized that the packaging also had to protect fats from becoming rancid and this led to the search for materials with a higher oxygen barrier. Nonetheless, the packaging technique used did not guarantee the required protection as the packages prepared contained air inside in quantities much greater (up to three times) than the quantity required to cause the dreaded rancidity, thus making it ineffective to use products with a high oxygen barrier, which prevent air from entering from outside, when air is already present inside.

It was then understood that the air contained in the packages had to be replaced with inert gases (the most suitable gas is nitrogen) and this gave rise to the technology of controlled atmosphere packaging. Materials with a high oxygen barrier were truly appreciated for the first time.

The first metallized structure (A-B-A) where A is an ethylene-propylene copolymer, did not give sufficiently high oxygen barrier values, with a truly excessive permeability range (OTR: 150-350 cc/24h m² -for a thickness of 25 µm).

The structure was then metallized, with the ethylene-propylene copolymer replaced by the ethylene-propylene-butene terpolymer. The use of this terpolymer in metallized structures overcame the problem of adhesion of the metal to the metallized surface and simultaneously improved the oxygen barrier of said structure. From an OTR range of 150-350 cc/24h m² - with a thickness of 25 µm, a range of 50-200 cc/24h m²- with a thickness of 25 µm was reached.

Simultaneously, it was also realized that the protection of fats contained in food products would be ineffective unless the transmission of light and UV rays was also prevented, as rancidity of fats is greatly encouraged by these radiations. Therefore, the metallized structure became much more important as it offered not only an oxygen barrier but also a light barrier, especially when the optical density of the metallized structures went from 2.0 to 2.5-3.0.

At this point of designing the packaging, it was realized that protection from oxygen and light alone was no longer sufficient as, if the package did not provide an adequate barrier to water vapor, there was still deterioration of the food product. In fact, transmission of water also causes passage of the oxygen dissolved in the water, which passes through the barrier constituted by the packaging material.

Attention was then paid to the barrier of the metallized film to water vapor and it was noted that the water vapor barrier of the metallized structure A-B-C, where the metallized face A is constituted by ethylene-propylene-butene terpolymer, has a water vapor barrier approximately 10 times better than the same non-metallized structure. In fact, while the non-metallized structure has a WVTR of 6-8 g/24h m² - with a thickness of 25 µm, the same metallized structure with optical density of 2.5 has a WVTR ranging from 0.5-0.9 g/24h m² - with a thickness of 25 µm.

Under the spur of knowledge of the effective requirements for food product preservation, various attempts were made to improve the performances of the metallized structures. Therefore, new compositions of these structures were studied and some were patented (see references). With these metallized structures, significantly better barrier values are obtained than those possible with preceding structures. In fact, metallized structures with improved oxygen and water vapor barriers are marketed; these have OTR values ranging from 25-50 cc/24h m² - with a thickness of 20 µm and WVTR values ranging from 0.3-0.6 g/24h m²- with a thickness of 20 µm.

Values even much lower than those cited above can be obtained with metallized structures in which the metallized layer is constituted by ethylene vinyl alcohol (EVOH) or polyvinyl alcohol copolymers. Nonetheless, these structures are subject to significant performance variations due to the sensitivity to water of the aforesaid polymers; these variations, together with the extremely high production cost of these structures, make these products unmarketable in the packaging of the food products cited above.

As can be seen from the data set forth above, while the oxygen and water vapor barriers of the most recent metallized structures are greatly improved with respect to those of previous structures, variability of the OTR and of the WVTR is still considerable. A structure that gives values within the wide range set forth above endangers the quality of the preserved products as protection offered by the packages varies with a ratio of one to two, meaning that the preservation time of the packaged element may be halved with respect to the time guaranteed by the sample with the highest permeability.

As a result, this variability greatly complicates both the production cycle and the distribution cycle of the packaged food product.

Finally, to complete the picture of the current situation relative to the performance of the various metallized structures, it is seen that normally these structures are subjected to some operations, before fulfilling their function, that is, to protect, distribute and display the packaged food product. These operations are:
- cutting and coupling with other films;
- cutting the coupled reels;
- transit through the food product packaging machines.

Each of these phases causes mechanical stress on the metallized surface, which may be the cause of deterioration of the barrier properties of these structures, doubling or trebling the OTR and WVTR values indicated above.

Examples of plastic packaging films and relative production methods are described in the patents USA 4,464,416; 4.692.379; 4.961.192; 4.590.125; 5.283.118; 5.698.317; 4.197.150; 5.346.763; 5.491.023; 6.706.412; in the European patent no. 468.333; in the international publications WO-A-2004/016417, WO-A-98/32597.

### Objects and summary of the invention

A first object of the invention is to provide a multilayer metallized plastic film with a high oxygen and water vapor barrier effect and with a high level of adhesion of the metallization layer to the plastic.

A second object of the present invention is to provide a method to produce a multilayer metallized plastic film having high properties of oxygen and water vapor barrier effects, and efficient anchoring of the metallization layer to the plastic substrate.

According to a first aspect, the invention relates to a multilayer metallized plastic packaging film, comprising at least: a metal layer deposited by vacuum metallization; a first plastic layer on a first surface of which the metal layer is applied; a second plastic layer coextruded with the first plastic layer and adhering to the surface of said first plastic layer opposite the metallized surface, said second layer providing the mechanical consistency to the plastic film; and wherein the first plastic layer comprises a propylene-alpha-olefin (butene) copolymer, and said first surface of the first plastic layer, after preliminary flame treatment, if necessary, is subjected to plasma surface treatment prior to deposition of the metal layer.

It has been found, as shall become apparent in the examples of embodiment illustrated below, that the use of the propylene-alpha-olefin copolymer, up till now not used in the production of bi-oriented films, in combination with plasma treatment, makes it possible to obtain excellent anchoring of the metal and a drastic reduction in the transmission of oxygen and water vapor with respect to films currently known on the market.

Preferably, the first plastic layer, on the external surface of which the metallization layer is deposited, comprises a percentage in weight of alpha-olefin (butene) from 2.5 to 20% and more preferably from 5% to 15%.

The first plastic layer can be constituted entirely by said copolymer, or can be constituted by mixtures including it. For example, the first layer may be constituted by a mixture of propylene/alpha-olefm copolymer and isotactic polypropylene, advantageously with a percentage of up to 25% in weight of alpha-olefin. The isotactic polypropylene can for example have a melting point ranging from 157-160°C. This mixture can have from 60 to 90% in weight of isotactic polypropylene and from 40 to 10% in weight of propylene-alpha-olefin copolymer.

To obtain a sealable and printable film a third plastic layer may advantageously be provided, coextruded with the first and the second plastic layer, forming a sealable surface opposite the metallization layer.

In a possible embodiment, the first plastic layer has a thickness ranging from 0.5-2 micrometers, the second plastic layer, the thickness of the metal layer ranges from 100-350 Angstroms and the thickness of the third plastic layer ranges from 0.8-4 micrometers, while the total thickness of the multilayer film advantageously ranges from 12-45 micrometers.

The metal layer is preferably constituted by aluminum, although the use of other metals, such as zinc, silver and gold, according to the uses for which the film is intended, is not excluded.

The bi-oriented coextruded plastic material is preferably subjected to a stretch ratio ranging from 1:20 to 1:80, preferably from 1:40 to 1:60 and even more preferably around 1:50.

The second plastic layer, which forms the core of the multilayer film and provides it with mechanical resistance, can be constituted by isotactic polypropylene, for example isotactic polypropylene with a melting point ranging from 157-173°C and preferably from 157-160°C, or 164-166°C or ranging from 169-173°C.

In a different form of embodiment the second plastic layer forming the core of the film is constituted by a mixture of two isotactic polypropylene polymers, preferably with melting point ranging from 157-163°C and 164-166°C respectively, in a ratio ranging from 90:10 to 40:60 % in weight, or by a mixture of two isotactic polypropylene polymers, with melting point ranging from 157-163°C and 169-173°C respectively, in a ratio ranging from 90:10 to 40:60 % in weight.

The third plastic sealable layer can be constituted by any material suitable for sealing and, if necessary, printing. It can, for example and advantageously, be constituted by a terpolymer based on propylene, ethylene and alpha-olefin, for example with a composition constituted by propylene 88-92%, ethylene 2-4%, butene (alpha-olefin) 4-7% in weight.

Different resins can also be added to the first plastic layer. In a possible embodiment, terpenic resins, or hydrogenated terpenic resins are added to this first plastic layer in quantities ranging from 5-25% in weight with respect to the propylene-alpha-olefin (butene) copolymer. When hydrogenated terpenic resins are used these have a hydrogenation level equal to or greater than 90% and preferably equal to or greater than 99%. Hydrogenated hydrocarbon resins can be used alternatively, or in combination, for example with a hydrogenation level of no less than 90% and preferably no less than 99% and with a glass transition temperature of no less than 60°C.

Terpenic resins and/or hydrogenated hydrocarbon resins can also be added to the second plastic layer, forming the core of the multilayer film, for example in percentages ranging from 5 to 20% in weight of the total weight of said layer.

The plastic film according to the invention can reach an oxygen transmission rate (OTR) equal to or less than 10 cc/24h m² with a thickness of 20 micrometers and preferably equal to or less than 6 cc/24h m² with a thickness of 20 micrometers and a water vapor transmission rate (WVTR) equal to or less than 0.1 g/24h m² with a thickness of 20 micrometers and preferably equal to or less than 0.05 g/24h m² with a thickness of 20 micrometers.

According to a different aspect, the invention relates to a method for the production of a multilayer metallized plastic film for packaging, comprising the steps of:
- coextruding a plastic film comprising at least a first plastic layer and a second plastic layer;
- bi-orienting the coextruded plastic film;
- vacuum metallizing the free surface of said first plastic layer;

characterized in that said free surface of the first plastic layer is plasma treated prior to vacuum deposition of the metal layer; and in that a propylene-alpha-olefin (butene) copolymer or mixtures containing said copolymer are used in the composition of said first plastic layer.

The plasma surface treatment can be performed with a mixture of binary, ternary or quaternary gases, comprising two, three or four gases chosen from the group comprising: helium, argon, oxygen, nitrogen, methane, carbon dioxide, water vapor. When the mixture utilized is binary, it preferably comprises at least helium or argon in percentages ranging from 50 to 95% in volume. If the plasma treatment is performed with a ternary mixture, this preferably comprises helium or argon, in percentages preferably ranging from 50 to 80% in volume. The helium or argon can be utilized in combination with a binary mixture chosen from the group comprising: oxygen-nitrogen; methane-nitrogen; oxygen-carbon dioxide; nitrogen-water vapor; carbon dioxide-water vapor; methane-water vapor.

In an advantageous embodiment of the method according to the invention, the plasma treatment is performed with a power density ranging from 2 to 6 Watts/cm² with gas flow rates that may for example range from 4 to 60 liters/hour and a film feed speed advantageously ranging from 5 to 12 m/s. Prior to plasma treatment a flame treatment can be performed with a linear density ranging from 30 to 70 W/cm.

The plasma treatment can be performed in a vacuum metallization plant with three chambers, advantageously in a vacuum condition ranging from 1x10^{-1.4} to 2.5x10⁻² mbar.

Further advantageous characteristics and embodiments of the film and of the method according to the invention are indicated in the appended claims.

### Brief description of the drawings

The invention shall now be better understood by following the description of the experimental phase and of some embodiments, also with reference to the accompanying drawings, wherein:
Figure 1 shows a schematic cross-section of a single-chamber metallizer;
Figure 2 shows a schematic cross-section of a metallizer with three chambers;
Figure 3 schematically shows a device for plasma treatment; and
Figure 4 schematically shows a greatly enlargement of a cross section of a film according to the invention.

### Detailed description of the preferred embodiments of the invention

Experimentation that led to the production of the multilayer film of the present invention commenced from the attempt to overcome (or at least to reduce) the problems created by degradation of the barrier properties of the metallized structure.
Degradation of the barrier properties is presumed to be caused by:
- excessive softness of the surface chosen for metallization
- micro-delaminations of the aluminum or other metal from the metallized surface (delaminations that occur due to stresses produced by processing and transformation during use of said metallized structure)
- insufficient mechanical performances of the metallized structure.

It can be seen from the previous observations in relation to the state of the art in the sector of metallized packaging films, that only softening of the metallized surface (switching from the ethylene-propylene copolymer to the ethylene-propylene-butene terpolymer) has made it possible to obtain adequate adhesion of the metal to the metallized surface. In fact, adhesion of the aluminum to the ethylene-propylene surface at times did not exceed 70% and this made the behavior of the metallized structure extremely variable from the point of view of oxygen barrier. It is therefore impossible to relinquish this surface characteristic, which was obtained by introducing butene (to the composition of the terpolymer, which constitutes the surface to be metallized).

It is thought that the presence of butene increases the receptivity of the metallizable surface showing a higher surface energy than the one shown by other surfaces. The improved receptivity allows improved distribution of the aluminum (or other metal) with consequent improved adhesion of the aluminum to the metallized surface.

The attention of the experimentation underlying this invention was therefore targeted at surfaces composed of polymers still containing butene (alpha-olefin), but harder with respect to those based on the ethylene-propylene-butene terpolymer currently used for this type of product.

Experimentation was carried out from verification of the availability on the market of polymers (or better copolymers) including butene in the polymer structure and harder than the ethylene-propylene-butene terpolymer. Experimentation was concentrated on three commercial resins: two produced by Basell and one by BP. The following table shows the difference in the aforesaid resins with respect to the ethylene-propylene-butene terpolymer normally used. The polymers are indicated with their trade names.

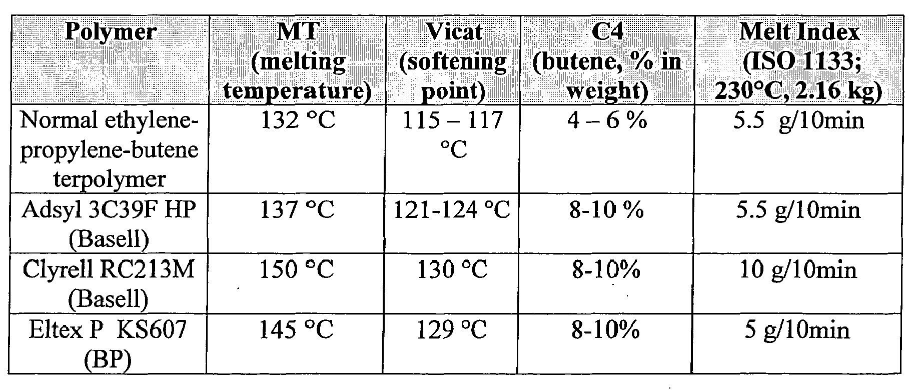

The three copolymers indicated in the table above are propylene and alpha-olefin (butene) copolymers currently utilized to produce "cast", that is, non bio-oriented, films.

To produce the multilayer film according to the invention they were used alone or in a mixture with high crystallinity polypropylene produced by Basell and marketed with the name Adstif HA722J and Adstif HA612M, characterized by a melting point (MT) of 164-165°C and a Vicat (softening point) of 159°C, with a Melt index respectively of 6.5 and 3.5 g/10min.

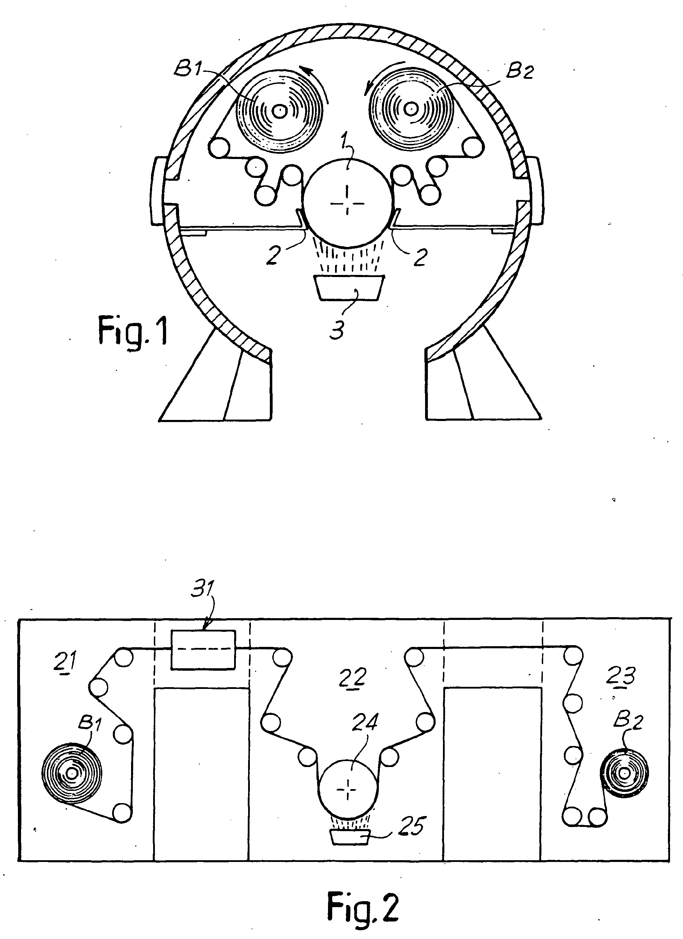

The copolymers indicated in the table above, alone or in a mixture with isotactic or high crystallinity polypropylene, were used to produce a first layer of structures with bi-orienting technology and having a configuration with three layers A-B-C. Layer A is constituted by the propylene and alpha-olefin copolymer or by a mixture containing said copolymer, while layer B constitutes the core of the multilayer film and the outer layer C constitutes the sealable and, if necessary, printable layer. The three layers (A-B-C) are melted by three separate extruders, conveyed and metered to a die with three separate channels. The melted product is cooled on a specific device constituted by a cooling roll and by a water bath, in which the film is immersed. The consolidated product (called base sheet) has a total thickness approximately 50 times the final thickness desired. In the case of the present invention, as 20 micrometers is the final thickness of the examples illustrated, the initial thickness of the film is approximately one millimeter. The transition from 1 mm to 20 micrometers is obtained in two phases: the first phase consists in longitudinal stretching to approximately 5 times the original length; the second consists in transverse stretching to approximately 10 times the original width. The product of the two stretching processes 5 x 10 represents the decreasing ratio from the initial thickness to the end thickness (1000/20). Finally, the film delivered from transverse stretching is treated with a "flame" device prior to being wound. The structures thus obtained were metallized in two metallizers represented in Figures 1 and 2 respectively. The metallizer in Figure 1 is a single chamber metallizer, or more precisely a metallizer with internal volume divided into two portions. Disposed in the upper portion, with a lesser vacuum, is the reel of film to be metallized, indicated with B1 and the reel of metallized material B2. The film F is driven around a process roll 1 which projects below two guard chambers 2, which delimit the lower part of the working volume, in which there is a higher vacuum and disposed in which are the metal vapor sources 3, for example boats heated by the Joule effect and fed by aluminum wire, or any other type of suitable source.

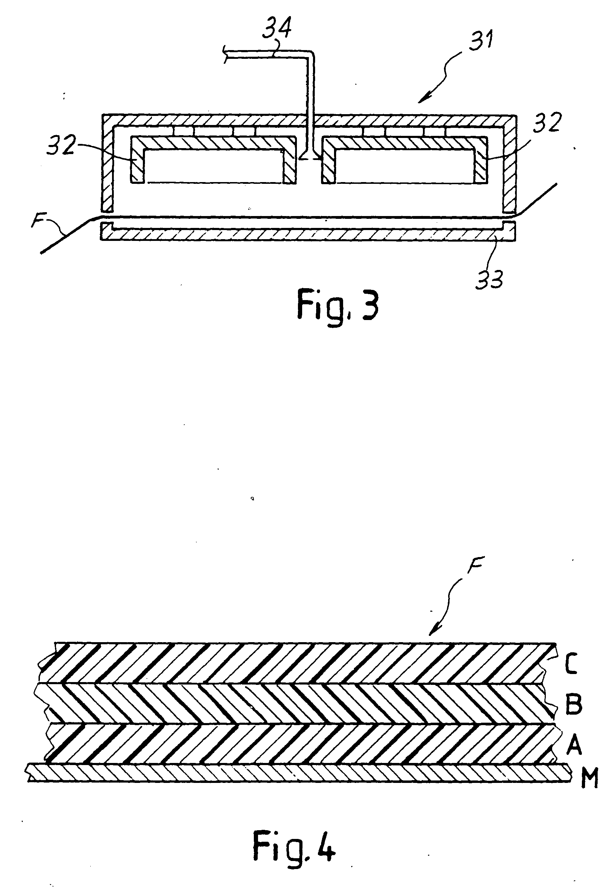

The metallizer in Figure 2 is a metallizer with three chambers, indicated with 21, 22 and 23. The chamber 21 contains the reel B 1 of film to metallize, the chamber 22 contains the process roll 24 and the chamber 23 contains the reel B2 of metallized film. Also disposed in the chamber 22 is the crucible 25 containing the film to vaporize, in the chamber 22. Disposed between the chamber 21 and the chamber 22 is a plasma treatment device, represented schematically in Figure 3 and indicated as a whole with 31.

The plasma treatment device 31 is per se known and comprises a 30 kW medium-radio frequency (MF/RF) generator and an RF oscillator with FRO (Free Running Oscillation), not shown, connected to the actual plasma source, represented schematically in Figure 3 and comprising two hollow cathodes 32 and one anode 33, between which the film F path is defined. The supply pipe of the gas mixture that forms the plasma is indicated with 34, with its outlet between the two hollow cathodes 32. The plasma generator is completed by

The device in question is characterized in that the plasma supply is to be considered, to all intents and purposes, an Alternating Current (AC) supply.

The treatment gas is managed by a specific blowing system between the anode and the two hollow cathodes while the film also runs between the anode and these hollow cathodes.

Tests performed with the metallizer relative to Figure 1, consist in unwinding of the reel B1, sublimation of the aluminum in the crucible 3 and condensation of the aluminum on the surface to be metallized. Condensation takes place by cooling the film on the process roll 1. The film thereby metallized is wound inside said metallizer.

The operating conditions were within the following ranges:
- aluminum evaporation rate: 7/10 g /min
- winding speed: 7/10 meters per second
- high vacuum more or less uniform throughout the chamber: 1.0-3.5 10⁻⁴ mbar
- cooling temperature of the process roll: -18/-20 °C
- optical density: 2.0-3.0.

The tests were performed on structures of the type A-B-C, that is, on coextruded films comprising three layers of plastic material, with the following functions:
A) layer intended for deposition of the aluminum ("skin")
B) layer intended for mechanical support of the "core" structure
C) layer intended for closing of the package by means of sealing the bottom and side of the package ("skin").

Figure 4 schematically shows, greatly enlarged and not in scale, the structure A-B-C of the film after metallization, that is, after formation of the layer of metal M on the external surface of the plastic layer A, in a cross section. The aforesaid structures have a final thickness ranging from 12-45 µm, wherein the layer A has a thickness ranging from 0.5-1.5 µm; the layer C has a thickness ranging from 1.0-1.3 µm; the layer B is the complement to the final thickness given by the sum of the thicknesses A+B+C.

The core is constituted by isotactic polypropylene, with isotactic index around 93-95% and characterized by a melting temperature ranging from 157-159°C and a Vicat S.P. ranging from 150-152 °C. At times the mechanical properties of the structure require to be higher; in this case the core B is constituted by a mixture of the aforesaid polypropylene with polypropylene resins with a higher isotactic index, for example, the resins Adstif HA722J and Adstif HA612M, with a melting point ranging from 164 to 166°C. The mixtures of the two polypropylene resins can even have a 1 to 1 ratio of the two polymers involved. In some cases, to improve the processability of the core, terpenic or hydrogenated hydrocarbon resins or low crystallinity copolymers, constituted by propylene and alpha-olefin (i.e. Tafmer XR, produced by Mitsui chemicals) are added.

The layer C ensures that the packages are closable and is constituted by an ethylene-propylene-butene terpolymer (ethylene ranging from 2-4%, butene C4 ranging from 4-6% in weight), characterized by a melting point ranging from 124-132°C and a Vicat S.P. ranging from 102-117°C.

In some cases, when the heat resistance of the seal does not require to be a characterizing element of the behavior of the package, propylene-butene copolymers, with a very high butene content (20-25% in weight) and with a Vicat S.P. of around 80-85°C, can be used.

The layer A was the principal object of experimentation, targeted at obtaining the required conditions of high barrier effect and the maintaining this through time. The layer A, called "coatable skin" and destined to be metallized, is constituted by the copolymer propylene-alpha-olefin, containing up to 10% of alpha-olefin, or by mixtures of this copolymer with propylene polymers with a high melting point (Adstif H712J and Adstif HA612M). These mixtures can include from 10 to 50% in weight of the aforesaid polypropylene polymers.

In a first experimentation phase, the layer A was prepared for the deposition of aluminum solely by flame treatment with linear density of 40-60 W/cm but without plasma treatment. Flame treatment allows the introduction of functional groups on the treated surface. The functional groups introduced by the flame treatment in question are:
- Hydroxyl -COH
- Ether -C-O-C-
- Ester -CO-O-
- Carbon -CO-
- Carboxyl -COOH
- Amide -CO-NH-
- Urethane -O-CO-NH-

After metallization the structures obtained were subjected to stresses linked to the subsequent transformation processes (cutting and lamination). The multilayer film thus produced was subjected to a series of standard tests, before and after being subjected to processing stresses, with the results indicated below:
- Aluminum adhesion (tape Test) 100%
- Longitudinal modulus of elasticity 1800-2400 N/mm²
- Sealability 1.8-2.1 N/cm
- Optical Density 2.0-3.0
- OTR (sample without stress) 15-30 cc/24h m² (20micrometers)
- WVTR (without stress tropical conditions) 0.3-0.8 g/24h m² (20micrometers)
- OTR (with stress) 25-45 cc/24h m² (20micrometers)
- WVTR (with stress tropical conditions) 0.5-1.1 g/24h m² (20micrometers)

From the above results it seems that the hypotheses made regarding the link between barrier properties (OTR, WVTR) and asperity of the surface, aluminum adhesion to said surface and its hardness are confirmed by the experiments carried out. Indeed, the behavior of metallized structures currently marketed give barrier values lower than those indicated above, especially after the stresses linked to transformation operations.

The OTR values of the products normally utilized are higher by 30-100% with respect to those obtained with the new structures indicated above and, above all, their variability is much greater (approximately double) than the variability of metallized films in which the layer A is constituted by the mixtures of the present invention.

In a second phase, the same structure A-B-C of multilayer film was metallized in a metallizer with three chambers of the type shown schematically in Figure 2 and using the plasma device 31 positioned along the path of the film from the unwinding chamber 21 to the metallization chamber 22.

The structures metallized using plasma on the metallizer with three chambers, indicated in figure 2, showed greatly improved barrier properties with respect to those indicated by the experimentations performed on the metallizer in Figure 1. The results obtained relative to the barriers are indicated below:
- OTR without stress 3-7 cc/24h m² (20 micrometers)
- WVTR without stress 0.03-0.09 g/24h m² (20 micrometers)
- OTR with stress 4-9 cc/24h m² (20 micrometers)
- WVTR with stress 0.05-0.10 g/24h m² (20 micrometers)
The other properties remain unvaried.

The tests were performed with mixtures of gases differing greatly from one another, as shown in the table below:

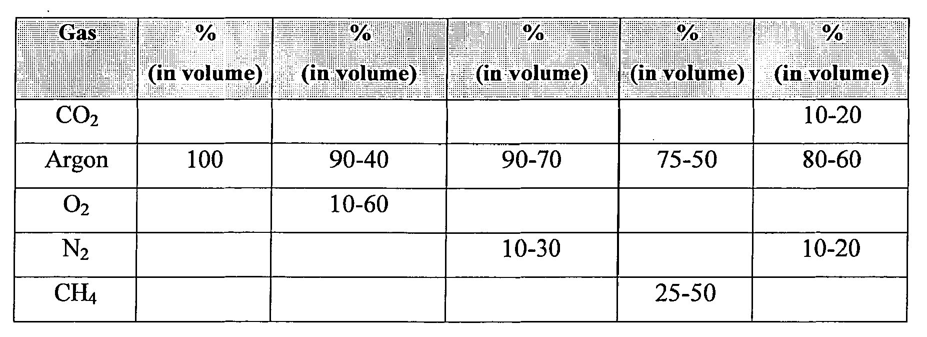

All these mixtures gave the results indicated above.

The same mixtures were used on the structures having an external layer to be metallized constituted by ethylene-propylene-butene terpolymers or other polyolefm polymers (modified or not) on the same metallizer with three chambers (Figure 2), and on the metallizer with one chamber (Figure 1). The results are disappointing if the plasma treatment is performed on the single chamber metallizer. In fact, the barrier properties have not improved. The results are better if plasma metallization is performed on the metallizer with three chambers. In fact, there is an improvement in said performances which can be evaluated statistically at around 25-35%. Therefore, these results are essentially lower than those obtained with the structures in which the metallized plastic layer is constituted by propylene-alpha-olefin copolymers or mixtures containing said copolymer according to the invention.

This improved behavior can be attributed to the combination of the skin composition A used and the plasma treatment on the metallizer with three chambers, which makes it possible to differ the vacuum conditions in the plasma and on the actual metallization chamber.

The following examples show possible compositions of the structure of the multilayer film, the metallization conditions and the relative results obtained in terms of barrier effect.

### Example 1

- Structure A-B-C
- A propylene-alpha-olefin copolymer 100%, thickness 0.6 micrometers
- B isotactic polypropylene 100%, thickness 18.2 micrometers
- C ethylene-propylene-alpha-olefin terpolymer 100%, thickness 1.2 micrometers

### Metallization conditions:

- Metallization rate 9 m/second
- Aluminum evaporation rate 9 g/minute
- O.D. 2.7
- Degree of vacuum in the metallization chamber 2.3 10⁻⁴ mbar
- Degree of vacuum in the plasma chamber 2.2 10⁻² mbar

**Performances:**

| | |
|---|---|
| OTR | 5.3 cc/24h m² (20 micrometers) (after stress) |
| WVTR | 0.044 g/24h m² (20 micrometers) (after stress) |
| Adhesion | 100% |
| Pick off | 0% |
| Long. ME | 1800 N/mm² |
| Trans. ME | 3200 N/mm² |
| Seal | 1.8 N/cm |

### Example 2

- A-B-C
- A 80-20% mixture of propylene-alpha-olefin copolymer with Adstif HA712J
- B isotactic polypropylene 100%
- C terpolymer as in example no. 1 .

Thicknesses as in example no. 1
Metallization conditions as in previous example.

### Performances:

- OTR 3.5 cc/24h m² (20 micrometers) (after stress)
- WVTR 0.039 g/24h m² (20 micrometers) (after stress)
- Adhesion 100%
- Pick off 0%
- Long. ME 1850 N/mm²
- Trans. ME 3350 N/mm²
- Seal 2 N/cm

### Example 3

- A-B-C
- A Propylene-alpha-olefin copolymer
- B Mixture of polypropylene with melting point 157/159C° with Adstif HA 712 J or Adstif HA612 M 60-40%
- C as in examples no. 1 and no. 2

Thickness as in previous examples.
Metallization conditions as in examples no. 1 and no. 2.
Performances:
- OTR 3.1 cc/24h m² (20 micrometers) (after stress)
- WVTR 0.025 g/24h m² (20 micrometers) (after stress)
- Adhesion 100%
- Pick off 0%
- Long. ME 2300 N/mm²
- Trans. ME 3900 N/mm²
- Seal 2.1 N/cm

### Example 4

- A-B-C
- A same composition as in example no. 2
- B same composition as in example no. 3
- C same composition as in example nos. 1, 2, 3.

Thickness of structure as in example nos. 1, 2, 3
Metallization conditions
as in previous examples.
Performances:
- OTR 2.9 cc/24h m² (20 micrometers)
- WVTR 0.031 g/24h m² (20 micrometers)
- Adhesion 100%
- Pick off 0%
- Long. M E 2450 N/mm²
- Trans. ME 3850 N/mm²
- Seal 1.9 N/cm

In all the examples, normal stabilizers-antioxidants can be added to the resins used and in particular conventionally used anti-blocking products are added to the skins.

## Claims

1. A multilayer metallized plastic film for packaging comprising at least: a metal layer deposited by vacuum metallization; a first plastic layer on a first surface of which the metal layer is applied; a second plastic layer coextruded with the first plastic layer and adhering to a second surface of said first plastic layer; said first and second plastic layer being bi-oriented; **characterized in that** said first plastic layer comprises a propylene-alpha-olefin (butene) copolymer, and **in that** said first surface of the first plastic layer, after preliminary flame treatment, if necessary, is subjected to plasma treatment prior to deposition of the metal layer.

2. Plastic film as claimed in claim 1, **characterized in that** said first plastic layer comprises a percentage in weight of alpha-olefin (butene) ranging from 2.5 to 20% in weight and more preferably from 5% to 15% in weight.

3. Plastic film as claimed in claim 1 or 2, **characterized in that** said first plastic layer is constituted entirely by said copolymer.

4. Plastic film as claimed in claim 1, 2 or 3, **characterized by** a third plastic layer, coextruded with the first and the second plastic layer, forming a sealable surface opposite the metallization layer.

5. Plastic film as claimed in one or more of the previous claims,
**characterized in that** said first plastic layer has a thickness ranging from 0.5-2 micrometers.

6. Plastic film as claimed in one or more of the previous claims,
**characterized in that** said metal layer is constituted by a metal chosen from the group comprising: aluminum, zinc, silver and gold.

7. Plastic film as claimed in one or more of the previous claims,
**characterized in that** said metal layer has a thickness ranging from 100-350 Angstroms.

8. Plastic film as claimed in one or more of the previous claims,
**characterized by** a stretch ratio ranging from 1:20 to 1:80, preferably from 1:40 to 1:60 and even more preferably around 1:50.

9. Plastic film as claimed in one or more of the previous claims,
**characterized in that** said second plastic layer is constituted by isotactic polypropylene.

10. Plastic film as claimed in claim 9, **characterized in that** said isotactic polypropylene forming the second plastic layer has a melting point ranging from 157-173°C and preferably from 157-160°C, or 164-166°C or ranging from 169-173°C.

11. Plastic film as claimed in one or more of the previous claims,
**characterized in that** said second plastic layer is constituted by a mixture of two isotactic polypropylene polymers, with melting point ranging from 157-163°C and 164-166°C respectively, in a ratio ranging from 90:10 to 40:60 % in weight.

12. Plastic film as claimed in one or more of claims 1 to 10, **characterized in that** said second plastic layer is constituted by a mixture of two isotactic polypropylene polymers with melting point ranging from 157-163°C and 169-173°C respectively, in a ratio ranging from 90:10 to 40:60 % in weight.

13. Plastic film as claimed in one or more of the previous claims,
**characterized in that** said third metal layer is constituted by a polymer based on propylene, ethylene and alpha-olefin.

14. Plastic film as claimed in claim 13, **characterized in that** said third layer has a composition constituted by propylene 88-92%, ethylene 2-4%, butene (alpha-olefin) 4-7% in weight.

15. Plastic film as claimed in claim 13 or 14, **characterized in that** the thickness of the third plastic layer ranges from 0.8 to 4 micrometers.

16. Plastic film as claimed in one or more of the previous claims,
**characterized by** a total thickness ranging from 12 to 45 micrometers.

17. Plastic film as claimed in one or more of the previous claims,
**characterized in that** said first plastic layer comprises a mixture of said propylene and alpha-olefin copolymer and of isotactic polypropylene.

18. Plastic film as claimed in claim 17, **characterized in that** said isotactic polypropylene present in the mixture forming the first plastic layer has a melting point ranging from 157 and 160°C.

19. Plastic film as claimed in claim 17 or 18, **characterized in that** said propylene and alpha-olefin (butene) copolymer has up to 25% in weight of butene.

20. Plastic film as claimed in claim 17, 18 or 19, **characterized in that** said mixture forming the first plastic layer comprises from 60 to 90% in weight of isotactic polypropylene, and from 40 to 10% in weight of propylene-alpha-olefin copolymer.

21. Plastic film as claimed in one or more of the previous claims,
**characterized in that** terpenic resins are added to said first plastic layer in quantities ranging from 5-25% in weight with respect to the propylene-alpha-olefin (butene) copolymer.

22. Plastic film as claimed in claim 21, **characterized in that** said terpenic resins are hydrogenated terpenic resins.

23. Plastic film as claimed in claim 22, **characterized in that** said hydrogenated terpenic resins have a hydrogenation level equal to or greater than 90% and preferably equal to or greater than 99%.

24. Plastic film as claimed in one or more of claims 1 to 20, **characterized in that** hydrogenated hydrocarbon resins are added to said first plastic layer.

25. Plastic film as claimed in claim 24, **characterized in that** said hydrogenated hydrocarbon resins have a hydrogenation level of no less than 90% and preferably no less than 99%.

26. Plastic film as claimed in claim 24 or 25, **characterized in that** said hydrogenated hydrocarbon resins have a glass transition temperature of no less than 60°C.

27. Plastic film as claimed in one or more of the previous claims,
**characterized in that** terpenic resins are added to said second plastic layer.

28. Plastic film as claimed in one or more of the previous claims,
**characterized in that** hydrogenated hydrocarbon resins are added to said second plastic layer.

29. Plastic film as claimed in claim 27 or 28, **characterized in that** said resins which are added to the second plastic layer are in percentages ranging from 5 to 20% in weight of the total weight of said layer.

30. Plastic film as claimed in one or more of the previous claims,
**characterized in that** it has an oxygen transmission rate (OTR) equal to or less than 10 cc/24h m² with thickness of 20 micrometers and preferably equal to or less than 6 cc/24h m² with thickness of 20 micrometers.

31. Plastic film as claimed in one or more of the previous claims,
**characterized in that** it has a water vapor transmission rate (WVTR) equal to or less than 0.1 g/24h m² with thickness of 20 micrometers and preferably equal to or less than 0.05 g/24h m² with thickness of 20 micrometers.

32. A method for the production of a multilayer metallized plastic film for packaging, comprising the phases of:
- coextruding a plastic film comprising at least a first plastic layer and a second plastic layer;
- bi-orienting the coextruded plastic film;
- vacuum metallizing the free surface of said first plastic layer;
**characterized in that** said free surface of the first plastic layer is plasma treated prior to vacuum deposition of the metal layer; and **in that** a propylene-alpha-olefin (butene) copolymer is used in the composition of said first plastic layer.

33. Method as claimed in claim 32, **characterized in that** said first plastic layer has an alpha-olefm content ranging from 2.5 to 20% in weight and preferably from 5 to 15% in weight.

34. Method as claimed in claim 32 or 33, **characterized in that** said first plastic layer is constituted entirely by said copolymer.

35. Method as claimed in claim 32, 33 or 34, **characterized in that** a third plastic layer is coextruded with the first and the second plastic layer, to form a sealable surface opposite the metallization layer.

36. Method as claimed in one or more of claims 32 to 35, **characterized in that** prior to plasma treatment, the free surface of the first plastic layer is treated with flame treatment.

37. Method as claimed in one or more of claims 32 to 36, **characterized in that** said plasma surface treatment is performed with a mixture of binary, ternary or quaternary gases, comprising two, three or four gases chosen from the group comprising: helium, argon, oxygen, nitrogen, methane, carbon dioxide, water vapor.

38. Method as claimed in claim 37, **characterized in that** said plasma surface treatment is performed with a binary mixture comprising at least helium or argon in percentages ranging from 50 to 95% in volume.

39. Method as claimed in claim 37, **characterized in that** said plasma surface treatment is performed with a ternary mixture comprising at least helium or argon preferably in percentages ranging from 50 to 80% in volume.

40. Method as claimed in claim 39, wherein the helium or argon is utilized in combination with a binary mixture chosen from the group comprising: oxygen-nitrogen; methane-nitrogen; oxygen-carbon dioxide; nitrogen-water vapor, carbon dioxide-water vapor; methane-water vapor.

41. Method as claimed in one or more of claims 32 to 40, **characterized in that** the plasma treatment is performed with a power density ranging from 2 to 6 Watt/cm².

42. Method as claimed in one or more of claims 32 to 41, **characterized in that** said plasma treatment is performed with a gas flow ranging from 4 to 60 liters/hour.

43. Method as claimed in one or more of claims 32 to 42, **characterized in that** said plasma treatment is performed with a film feed speed ranging from 5 to 12 m/s.

44. Method as claimed in at least claim 36, **characterized in that** said flame treatment is performed with a power density ranging from 30 to 70 W/cm².

45. Method as claimed in one or more of claims 32 to 44, **characterized in that** said plasma treatment is performed in a vacuum metallization plant with three chambers.

46. Method as claimed in one or more of claims 32 to 45, **characterized in that** said plasma treatment is performed in a vacuum condition ranging from 1x10^{-1.4} to 2.5x10⁻² mbar.

47. Method as claimed in one or more of claims 32 to 46, **characterized by** a third plastic layer, coextruded with the first and the second plastic layer, forming a sealable surface opposite the metallization layer.

48. Method as claimed in one or more of claims 32 to 47, **characterized in that** said first plastic layer has a thickness ranging from 0.5-2 micrometers.

49. Method as claimed in one or more of claims 32 to 48, **characterized in that** said metal layer is obtained by vacuum deposition of a metal chosen from the group comprising: aluminum, zinc, silver and gold.

50. Method as claimed in one or more of claims 32 to 49, **characterized in that** a metal layer is formed with a thickness ranging from 100-350 Angstroms.

51. Method as claimed in one or more of claims 32 to 50, **characterized in that** the coextruded film is subjected to a stretch ratio ranging from 1:20 to 1:80, preferably from 1:40 to 1:60 and even more preferably around 1:50.

52. Method as claimed in one or more of claims 32 to 51, **characterized in that** said second plastic layer is constituted by isotactic polypropylene or by mixtures of isotactic polypropylene with different melting points.

53. Method as claimed in claim 52, **characterized in that** said isotactic polypropylene forming the second plastic layer has a melting point ranging from 157-173°C and preferably from 157-160°C, or 164-166°C or ranging from 169-173°C

54. Method as claimed in one or more of claims 32 to 53, **characterized in that** said second plastic layer is constituted by a mixture of two isotactic polypropylene polymers, with melting point ranging from 157-163°C and 164-166°C respectively, in a ratio ranging from 90:10 to 40:60% in weight.

55. Method as claimed in one or more of claims 32 to 52, **characterized in that** said second plastic layer is constituted by a mixture of two isotactic polypropylene polymers, with melting point ranging from 157-163°C and 169-173°C respectively, in a ratio ranging from 90:10 to 40:60% in weight.

56. Method as claimed in one or more of claims 32 to 55, **characterized in that** said third plastic layer is constituted by a polymer based on propylene, ethylene and alpha-olefin.

57. Method as claimed in claim 56, **characterized in that** said third layer has a composition constituted by propylene 88-92%, ethylene 2-4%, butene (alpha-olefin) 4-7% in weight.

58. Method as claimed in claim 56 or 57, **characterized in that** the thickness of the third plastic layer ranges from 0.8 to 4 micrometers.

59. Method as claimed in one or more of claims 32 to 58, **characterized in that** the final film has a total thickness ranging from 12 to 45 micrometers.

60. Method as claimed in one or more of claims 32 to 59, **characterized in that** said first plastic layer comprises a mixture of said propylene and alpha-olefin copolymer and of isotactic polypropylene.

61. Method as claimed in claim 60, **characterized in that** said isotactic polypropylene present in the mixture forming the first plastic layer has a melting point ranging from 157-160°C

62. Method as claimed in claim 60 or 61, **characterized in that** said propylene and alpha-olefin (butene) copolymer has up to 25% in weight of butene.

63. Method as claimed in claim 60, 61 or 62, **characterized in that** said mixture forming the first plastic layer comprises from 60 to 90% in weight of isotactic polypropylene, and from 40 to 10% in weight of propylene-alpha-olefin copolymer.

64. Method as claimed in one or more of claims 32 to 63, **characterized in that** terpenic resins are added to said first plastic layer in quantities ranging from 5-25% in weight with respect to the propylene-alpha-olefin (butene) copolymer.

65. Method as claimed in claim 64, **characterized in that** said terpenic resins are hydrogenated terpenic resins.

66. Method as claimed in claim 65, **characterized in that** said hydrogenated terpenic resins have a hydrogenation level equal to or greater than 90% and preferably equal to or greater than 99%.

67. Method as claimed in one or more of claims 32 to 63, **characterized in that** said hydrogenated hydrocarbon resins are added to said first plastic layer.

68. Method as claimed in claim 67, **characterized in that** said hydrogenated hydrocarbon resins have a hydrogenation level of no less than 90% and preferably no less than 99%.

69. Method as claimed in claim 67 or 68, **characterized in that** said hydrogenated hydrocarbon resins have a glass transition temperature of no less than 60°C.

70. Method as claimed in one or more of claims 32 to 69, **characterized in that** terpenic resins or hydrogenated hydrocarbon resins are added to said second plastic layer.

71. Method as claimed in claim 70, **characterized in that** said resins which are added to the second plastic layer are in percentages ranging from 5 to 20% in weight of the total weight of said layer.
